# EUROPÄISCHE PATENTSCHRIFT

(11) **EP 2 114 830 B1**
(45) Veröffentlichungstag und Bekanntmachung des Hinweises auf die Patenterteilung: **14.03.2012**
(21) Anmeldenummer: 08715666.7
(22) Anmeldetag: 30.01.2008
(51) Int. Cl.: C02F 1/46

(54) **SANITÄRE ENTKEIMUNGSVORRICHTUNG ZUR BEKÄMPFUNG VON MIKROORGANISMEN IN WASSER, SANITÄREINRICHTUNG**
SANITARY DISINFECTION APPARATUS FOR THE CONTROL OF MICROORGANISMS IN WATER, SANITATION DEVICE
DISPOSITIF D'ASEPTISATION SANITAIRE DESTINÉ À LUTTER CONTRE LES MICRO-ORGANISMES DANS L'EAU, SYSTÈME SANITAIRE

(30) Priorität: 01.02.2007 DE 102007005012
(43) Veröffentlichungstag der Anmeldung: 11.11.2009
(73) Patentinhaber: Hansa Metallwerke AG, 70567 Stuttgart (DE)
(72) Erfinder: AUER-KANELLOPOULOS, Friedrich, 72076 Tübingen (DE); BAUFELD, Eric-Sebastian, 71083 Herrenberg (DE)
(74) Vertreter: Ostertag, Ulrich
(86) Internationale Anmeldenummer: PCT/EP2008/000705
(87) Internationale Veröffentlichungsnummer: WO 2008/092652

(56) Entgegenhaltungen:
- DE-A1- 3 037 046
- DE-A1- 3 543 223
- DE-A1- 10 134 468
- GB-A- 2 345 917
- US-A- 2 243 761
- US-A- 4 769 120
- US-A1- 2006 163 170
- US-B1- 6 514 406

## Beschreibung

Die Erfindung betrifft eine sanitäre Entkeimungsvorrichtung zur Bekämpfung von Mikroorganismen in Wasser nach dem Oberbegriff des Patentanspruchs 1. Außerdem betrifft die Erfindung eine Sanitäreinrichtung, welche eine solche Entkeimungsvorrichtung aufweist.

Eine sanitäre Entkeimungsvorrichtung und ein Verfahren zum Betreiben einer sanitären Entkeimungsvorrichtung sind aus der DE 101 34 468 A1 bekannt. Dort wird ein wendelförmiger Silberdraht mit einem ebenfalls wendelförmigen Edelstahldraht ohne direkte Verbindung miteinander in einer Leitung angeordnet, so dass sich im Kontakt mit Wasser zwischen diesen beiden Partnern entsprechend der elektrochemischen Spannungsreihe der Elemente ein elektrostatisches Feld aufbaut. Dieses E-Feld wird ohne Zuschalten einer äußeren Quelle alleine durch das Lösen von Ionen in dem Wasser erzeugt und hemmt das Wachstum von Keimen. Zudem wirken Silberionen abtötend gegenüber Bakterien und Keimen. Die Freisetzung von Silberionen erfolgt hier, solange sich die Vorrichtung im Wasser befindet, unabhängig davon, ob das Wasser in der Leitung steht oder fließt.

Bei einer aus der GB 2 345 917 A bekannt gewordenen Vorrichtung zur Einleitung biozider Ionen in Wasser wird gezielt Wechselstrom in die dort im Inneren der Vorrichtung angeordneten Elektroden eingespeist und so die Abgabe von Ionen in fließendes Wasser unterstützt. Diese Vorrichtung weist ein langgestrecktes Rohr mit beidseits an dessen Enden vorgesehenen Verschraubungen auf. Der Einbau ins Innere einer Leitung ist dort nicht vorgesehen. Ähnliches gilt für die aus der US 2 243 761 bekannte Sterilisierungseinrichtung für Flüssigkeiten. Dort wird zusätzlich zur Abgabe biozider Ionen auch noch Wärme verwendet.

Aufgabe der vorliegenden Erfindung ist es, eine Vorrichtung der eingangs genannten Art so auszugestalten, dass gezielt biozide Ionen ins Wasser freigesetzt werden, ohne dass diese Funktion durch Deformation der Leitung gefährdet wäre.

Diese Aufgabe wird gemäß einem ersten Erfindungsaspekt durch eine sanitäre Entkeimungsvorrichtung mit den im Patentanspruch 1 angegebenen Merkmalen gelöst.

Dadurch, dass die wenigstens zwei Elektroden als Doppelhelix angeordnet sind, und von wenigstens einem sich zumindest im Wesentlichen über die Länge der Elektroden erstreckenden Abstandshalter aus elektrisch isolierendem Material auf Abstand gehalten sind, sind die beiden Elektroden zwischeneinander überall berührungslos; der Abstandshalter hält die Elektroden zumindest nahezu über ihre gesamte Länge zuverlässig auf Abstand.

Indem der wenigstens eine Abstandshalter faden-, schnur- oder bandförmig ausgebildet ist und die wenigstens zwei Elektroden derart mit dem wenigstens einen Abstandshalter ein Geflecht bilden, dass sie einander nicht berühren, werden die Elektroden radial und axial bezogen auf die Längsrichtung der Leitung und des Geflechts auf Abstand gehalten, auch wenn das Geflecht deformiert wird. Die an sich bekannte wendelförmige Anordnung der Elektroden ermöglicht im Verhältnis zur Gesamtlänge des Geflechts eine große Wirkoberfläche im Wasser. Das Geflecht ist für Wasser leicht durchdringbar, wenn es in die Leitung eingebracht wird. Die Oberflächen der Elektroden können so vollständig blank sein, ihre Oberflächen müssen nicht gegenüber der jeweils anderen Elektrode elektrisch isoliert sein. Die Elektroden stehen dann großflächig mit dem Wasser in Kontakt. Das Geflecht aus Elektroden und Abstandshaltern kann ferner einfach mit Flechtmaschinen hergestellt werden.

In der Ausgestaltung der Erfindung gemäß dem Anspruch 2 ist vorgesehen dass sie zur elektrolytischen Freisetzung der bioziden Ionen auf unterschiedliche elektrische Potentiale gebracht werden können. Da sichergestellt ist, dass die beiden Elektroden sich unter keinen Umständen berühren, können sie ohne Kurzschlussrisiko auf unterschiedliche elektrische Potentiale gebracht werden. Dies ermöglicht die zuverlässige elektrolytische Freisetzung der bioziden Ionen. Die elektrolytische Freisetzung der bioziden Ionen ist gezielt steuerbar. Sie kann bedarfsgerecht an- und abgeschaltet werden. Die Freisetzung der bioziden Ionen und damit die Bekämpfung der Mikroorganismen kann so stets auf die vorliegenden Umstände, insbesondere die Wassermenge und/oder Keimmenge eingestellt werden.

Bei einer vorteilhaften Ausführungsform gemäß Anspruch 3 kann das Geflecht aus den Elektroden und dem wenigstens einen Abstandshalter flexibel sein, so dass es einfach auch in eine gebogene Leitung eingeschoben werden kann und sich mit der Leitung, beispielsweise einem flexiblen Brauseschlauch, mit biegt. Dies ist insbesondere beim Einsatz der Entkeimungsvorrichtung in flexiblen Brauseschläuchen von Vorteil, da diese sowohl während der Nutzung als auch während einer Nichtbenutzung in unterschiedlicher Weise gekrümmt werden.

Bei einer weiteren vorteilhaften Ausführungsform gemäß Anspruch 4 können die Elektroden Silber aufweisen, insbesondere jeweils ein oder mehrere Silberdrähte oder - bänder oder mit Silber beschichtete Drähte oder Bänder sein. Silber ist verhältnismäßig preiswert und hat eine stark abtötende Wirkung gegenüber Bakterien und Keimen, insbesondere Legionellen. Für Menschen sind Silberionen in der verwendeten Konzentration unbedenklich.

Um die beiden Elektroden gegeneinander zu isolieren, kann gemäß Anspruch 5 wenigstens einer der Abstandshalter in gleichem Wickelsinn wie die Elektroden wendelförmig zwischen den Elektroden verlaufen.

Zusätzlich oder alternativ kann gemäß Anspruch 6 wenigstens einer der Abstandshalter wendelförmig in entgegengesetztem Wickelsinn wie die Elektroden verlaufen und mit den Elektroden und gegebenenfalls mit dem in gleichem Wickelsinn wie die Elektroden verlaufenden Abstandshalter verflochten sein. Auf diese Weise wird die Bewegungsfreiheit der Elektroden relativ zueinander und damit die Gefahr einer Berührung deutlich reduziert. Außerdem halten die Abstandshalter die Elektroden so auch auf Abstand zu der Wand der Leitung.

Der wenigstens eine Abstandshalter kann gemäß Anspruch 7 aus einem wasserbeständigen, vorzugsweise gesundheitlich unbedenklichen Material, insbesondere Kunststoff, sein. Kunststoff ist ein guter elektrischer Isolator. Geeignete Kunststoffe haben eine große mechanische Festigkeit und sind dennoch flexibel. Sie sind temperatur-und alterungsbeständig und können so dauerhaft in der Leitung verbleiben.

Um die Elektroden auf die erforderlichen Potentiale zu bringen, kann gemäß Anspruch 8 jede Elektrode mit einem Ausgang einer Spannungsquelle, insbesondere einer Gleichspannungsquelle, verbunden sein.

Zweckmäßigerweise kann gemäß Anspruch 9 die Polarität der Ausgänge der Spannungsquelle getauscht werden. Auf diese Weise setzen die Elektroden abwechselnd biozide Ionen frei. Die Elektroden werden so gleichmäßig abgebaut, was die Standzeit der Vorrichtung verlängert.

Ferner kann gemäß Anspruch 10 die Spannungsquelle abhängig von einer Wasserströmung in der Leitung gesteuert werden. So können die Elektroden vorzugsweise dann, wenn das Wasser in der Leitung steht, auf die entsprechenden Potentiale gebracht werden. In stehendem Wasser ist die Gefahr der Keimvermehrung größer als in fließendem Wasser.

Gemäß einem weiteren Aspekt der Erfindung ist eine Sanitäreinrichtung mit wenigstens einer Sanitärarmatur zur Regulierung eines Wasserstroms und mit einer Leitung vorgesehen, wobei die Leitung die Sanitärarmatur kommunizierend mit einem Wasserausströmer verbindet. Die Sanitäreinrichtung umfasst eine in der Leitung angeordnete sanitäre Entkeimungsvorrichtung. Bei der Sanitärarmatur kann es sich um ein Ventil für eine Wasserleitung oder um eine Mischbatterie zur benutzerdefinierten Mischung von Warm- und Kaltwasserströmen zu einem Mischwasserstrom handeln. Die Sanitärarmatur steht über die Leitung, die starr oder flexibel ausgeführt sein kann, mit dem Wasserausströmer, der insbesondere als Duschkopf, Seitenbrause oder Fußbrause ausgeführt sein kann, in kommunizierender Verbindung. Damit kann der Wasserstrom von der Sanitärarmatur über die Leitung an den Wasserausströmer bereitgestellt werden. Über einen Teil der Länge der Leitung oder längs der gesamten Leitung erstreckt sich in dem von der Leitung umfassten Leitungsquerschnitt die sanitäre Entkeimungsvorrichtung. Alternativ kann vorgesehen werden, dass die Entkeimungsvorrichtung in einer stromauf des Ventils oder der Mischbatterie angeordneten Leitung integriert ist, insbesondere wenn das Ventil oder die Mischbatterie als Wasserhahn mit Wasserauslauf ausgebildet ist.

Bei der Weiterbildung der Erfindung gemäß dem Anspruch 12 ist vorgesehen, dass wenigstens eine elektrische Spannungsquelle zum Betreiben der sanitären Entkeimungsvorrichtung vorgesehen ist. Bei der Spannungsquelle kann es sich um ein Netzgerät handeln, das mit einem externen Stromnetz verbunden ist. Alternativ oder ergänzend kann ein integrierter Energiespeicher, insbesondere eine Batterie oder ein Akkumulator, vorgesehen sein, der netzunabhängig elektrische Energie zur Entkeimung bereitstellen kann.

Bei der Sanitäreinrichtung nach dem Anspruch 13 ist vorteilhaft, dass mit der wenigstens einen Steuereinrichtung zur Ansteuerung der Spannungsquelle eine Entkeimung in regelmäßigen oder unregelmäßigen zeitlichen Abständen vorgenommen werden kann, um einen vorteilhaften Kompromiss zwischen einer zuverlässigen Keimabtötung und einer geringen Abnutzung der Elektroden zu erreichen.

In weiterer Ausgestaltung der Erfindung ist vorgesehen, dass die Steuereinrichtung mit wenigstens einer Sensoreinrichtung zur Detektion eines Wasserstroms gekoppelt ist, um, vorzugsweise bei Vorliegen des Wasserstroms, einen Betrieb der sanitären Entkeimungsvorrichtung zumindest zeitweilig zu unterbrechen. Dies ermöglicht eine gezielte, vom Benutzungsumfang der Sanitäreinrichtung abhängige Entkeimung. Vorteilhaft wird eine Entkeimung unmittelbar nach Beendigung einer mit einem Strömen des Wassers verbundenen Wasserentnahme aus der Sanitäreinrichtung durch Bereitstellung einer elektrischen Spannung an die Elektroden vorgenommen. Besonders vorteilhaft ist es, wenn eine Entkeimung in regelmäßigen oder zunehmenden zeitlichen Abständen nach der Beendigung der Wasserentnahme vorgenommen wird, um ein Anwachsen der Keimkonzentration im ruhenden Wasser zu verhindern.

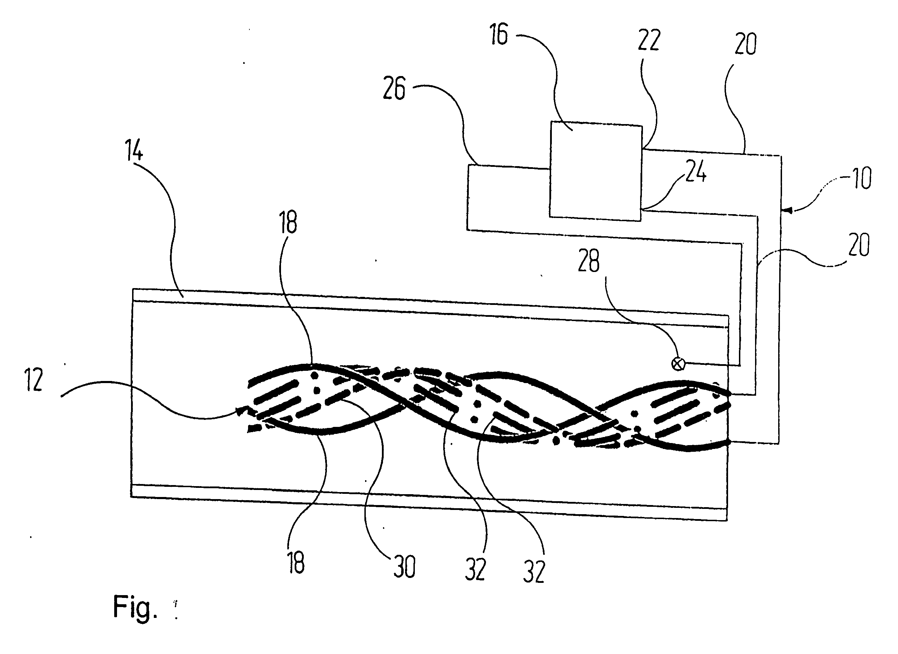

Weitere Vorteile, Merkmale und Einzelheiten der Erfindung ergeben sich aus der nachfolgenden Beschreibung, in der Ausführungsbeispiele der Erfindung nachfolgend anhand der Zeichnung näher erläutert werden. Dabei zeigt die einzige:
- Figur: eine insgesamt mit dem Bezugszeichen 10 versehene Entkeimungsvorrichtung zum Abtöten von Keimen, beispielsweise Legionellen, in Wasser.

Die Entkeimungsvorrichtung 10 verfügt über ein Geflecht 12, welches in einem Brauseschlauch 14 angeordnet ist, und eine Steuereinheit 16 außerhalb des Brauseschlauchs 14. In der Figur ist lediglich ein Abschnitt des Brauseschlauchs 14 dargestellt. Das Geflecht 12 ist flexibel, so dass es einfach in den Brauseschlauch 14 eingeschoben werden kann und sich der Biegung des Brauseschlauchs 14 anpasst.

Das Geflecht 12 umfasst zwei Silberdrähte 18, die in Form einer Doppelhelix ohne sich zu berühren umeinander geflochten sind.

Zwischen den beiden Silberdrähten 18 verläuft im gleichen Wickelsinn wie die Silberdrähte 18 ein gestrichelt gezeichneter erster elektrisch isolierender Faden 30, der die beiden Silberdrähte 18 in axialer Richtung der Doppelhelix auf Abstand hält.

Zwei weitere in der Figur strichgepunktete elektrisch isolierende Fäden (Gegenfäden 32) sind im entgegengesetzten Wickelsinn mit den Silberdrähten 18 und dem Faden 30 verflochten. Die Gegenfäden 32 halten die Silberdrähte 18 auch bei einer Deformation des Geflechts 12 axial und radial zur Längsrichtung des Brauseschlauchs 14 auf Abstand. Deformiert wird das Geflecht 12 beispielsweise beim Einschieben in den Brauseschlauch 14 oder beim Biegen des Brauseschlauchs 14.

Außerdem unterbinden die Gegenfäden 32 weitgehend, dass die Silberdrähte 18 die Wände des Brauseschlauchs 14 berühren, so dass das Wasser ungehindert das Geflecht 12 durchdringen kann und die Silberdrähte 18 möglichst großflächig kontaktiert.

Zusätzlich kann das Geflecht 12 mit weiteren isolierenden Fäden umflochten sein, wodurch der Mindestabstand der Silberdrähte 18 zu der Wand des Brauseschlauchs 14 nochmals vergrößert wird; dies ist in der Figur \ nicht gezeigt.

Jeder Silberdraht 18 ist mit einem Ende über eine elektrische Leitung 20 mit einem Spannungsausgang 22 beziehungsweise 24 der Steuereinheit 16 verbunden. Die jeweils anderen Enden der Silberdrähte 18 sind frei. Der Verlauf der Leitungen 20 in der Figur ist lediglich schematisch. Die Leitungen 20 führen beispielsweise aus einem nicht gezeigten Anschlussstück am stromaufwärtigen Ende des Brauseschlauchs 14 heraus.

Die Silberdrähte 18 sind mit dem Wasser im Brauseschlauch 14 in Kontakt, so dass eine elektrolytische Freisetzung von Silberionen in das Wasser erfolgt, sobald die Silberdrähte 18 mit der Steuereinheit 16 auf bestimmte unterschiedliche Potentiale gebracht werden. Die Silberionen töten Keime im Wasser ab.

Die Spannungsausgänge 22 und 24 der Steuereinheit 16 können wahlweise auf unterschiedliche oder gleiche Potentiale gelegt werden; letzteres um die elektrolytische Freisetzung von Silberionen zu stoppen. Die Polarität der Spannungsausgänge 22 und 24 kann auch periodisch getauscht werden, um eine gleichmäßige Abtragung der Silberdrähte 18 zu erreichen.

Die Steuereinheit 16 ist ferner über eine Signalleitung 26 mit einem Sensor 28 verbunden, der sich in dem Brauseschlauch 14 befindet. Der Sensor 28 erfasst, ob das Wasser im Brauseschlauch 14 strömt oder steht, und leitet ein entsprechendes Signal über die Signalleitung 26 an die Steuereinheit 16 weiter.

Beim Betreiben der Entkeimungsvorrichtung 10 wird zunächst vom Sensor 28 erfasst wenn das Wasser in dem Brauseschlauch 14 zum Stehen kommt. Dies wird über die Signalleitung 26 an die Steuereinheit 16 übermittelt. Nach einer in der Steuereinheit 16 vorgegebenen Stillstandszeit werden die beiden Spannungsausgänge 22 und 24 und somit über die Leitungen 20 die beiden Silberdrähte 18 auf mit der Steuereinheit 16 vorgegebene bestimmte unterschiedliche Potentiale gebracht. Dies hat zur Folge, dass an der mit dem Wasser in Berührung stehenden Oberfläche des einen Silberdrahts 18 Silberionen elektrolytisch freigesetzt werden. Mit den Silberionen werden in dem Wasser enthaltene Keime abgetötet. Überschüssige Silberionen werden an der mit dem Wasser in Berührung stehenden Oberfläche des anderen Silberdrahts 18 elektrolytisch abgeschieden, so dass nur die zur Keimtötung erforderliche Menge an Silberionen im Wasser ist.

Nach einer in der Steuereinheit 16 vorgegebenen Betriebszeit werden die Spannungsausgänge 22 und 24 der Steuereinheit 16 umgepolt, so dass nun der Silberdraht 18, an welchem zuvor Silber abgeschieden wurde, Silberionen freisetzt und an dem anderen Silberdraht 18 Silber abgeschieden wird.

Die Entkeimung des im Brauseschlauch 14 stehenden Wassers wird in der oben beschriebenen Weise in regelmäßigen, mit der Steuereinheit 16 vorgegebenen Intervallen wiederholt, bis der Sensor 28 erfasst, dass das Wasser fließt. Dann werden mit der Steuereinheit 16 die Spannungsausgänge 22 und 24 und damit die Silberdrähte 18 automatisch auf gleiches Potential gebracht und die elektrolytische Freisetzung von Silberionen wird gestoppt.

Bei dem oben beschriebenen Ausführungsbeispiel einer Entkeimungsvorrichtung 10 sind unter anderem folgende Modifikationen möglich:

Die Entkeimungsvorrichtung 10 ist nicht beschränkt auf den Einsatz in dem Brauseschlauch 14. Vielmehr kann sie auch in andersartigen sanitären Leitungen, beispielsweise in einem Brausekopf, einem Wasserauslauf einer Armatur oder einer Hauswasserleitung, eingesetzt werden. Die Entkeimungsvorrichtung 10 kann aber auch in einem Wasserbehälter einer Toilette oder einem andersartigen Brauchwasserbehälter verwendet werden.

Es können auch mehr oder weniger als drei isolierende Fäden 30, 32 mit den Silberdrähten 18 verflochten sein. Statt einzelner Fäden 30, 32 können auch Schnüre aus mehreren miteinander verflochtenen Fäden verwendet werden. Anstelle der Fäden 30, 32 können auch andere schnur- oder bandförmige Abstandshalter, beispielsweise isolierende Bänder, eingesetzt werden.

Die isolierenden Fäden 30, 32 können statt aus Kunststoff auch aus einem anderen zumindest an der Oberfläche isolierenden Material sein. Es können auch mit Kunststoff beschichtete Drähte oder Bänder eingesetzt werden.

An Stelle der Silberdrähte 18 können auch Silberbänder verwendet werden. Statt der einzelnen Silberdrähte 18 kann auch jeweils ein Flechtwerk aus mehreren Silberdrähten 18 oder Silberbändern verwendet werden. Es können auch andersartige mit Silber beschichtete Drähte eingesetzt werden.

Es können auch mehrere Silberdrahtpaare im gleichen Wicklungssinn gewickelt und mit isolierenden Fäden 30, 32 auf Abstand gehalten werden.

Statt Silber kann auch ein andersartiger Stoff verwendet werden, der biozide Ionen elektrolytisch freisetzten kann.

Bei einer elektrisch betätigten Sanitärarmatur kann statt des Sensors 28 auch eine Signalverbindung zu einer Steuereinrichtung für die Sanitärarmatur vorgesehen sein, über welche der Status der Wasserströmung im Brauseschlauch 14 an die Steuereinheit 16 der Entkeimungsvorrichtung 10 übermittelt wird.

## Patentansprüche

1. Sanitäre Entkeimungsvorrichtung zur Bekämpfung von Mikroorganismen in Wasser, die zur Anordnung im Inneren einer Leitung ausgebildet ist und die wenigstens zwei Elektroden (18) umfasst, welche jeweils wendelförmig ausgebildet sind, wobei zumindest aus einer Elektrode (18) biozide Ionen freigesetzt werden können,
**dadurch gekennzeichnet, dass**
die wenigstens zwei Elektroden (18) als Doppelhelix angeordnet sind, und von wenigstens einem sich zumindest im Wesentlichen über die Länge der Elektroden (18) erstreckenden Abstandshalter (30, 32) aus elektrisch isolierendem Material auf Abstand gehalten sind; wobei
der wenigstens eine Abstandshalter (30, 32) faden-, schnur- oder bandförmig ausgebildet ist, und
die wenigstens zwei Elektroden (18) mit dem wenigstens einen Abstandshalter (30, 32) derart ein Geflecht (12) bilden, dass sie einander nicht berühren.

2. Vorrichtung nach Anspruch 1, **dadurch gekennzeichnet, dass** die wenigstens zwei Elektroden (18) zur elektrolytischen Freisetzung der bioziden Ionen auf unterschiedliche elektrische Potentiale gebracht werden können.

3. Vorrichtung nach Anspruch 1 oder 2, **dadurch gekennzeichnet, dass** das Geflecht (12) aus den Elektroden (18) und dem wenigstens einen Abstandshalter (30, 32) flexibel ist.

4. Vorrichtung nach einem der Ansprüche 1 bis 3, **dadurch gekennzeichnet, dass** die Elektroden (18) Silber aufweisen, insbesondere jeweils ein oder mehrere Silberdrähte (18) oder -bänder oder mit Silber beschichtete Drähte oder Bänder sind.

5. Vorrichtung nach einem der Ansprüche 1 bis 4,
**dadurch gekennzeichnet, dass** der wenigstens eine Abstandshalter (30) in gleichem Wickelsinn wie die Elektroden (18) wendelförmig zwischen den Elektroden (18) verläuft.

6. Vorrichtung nach einem der Ansprüche 1 bis 5,
**dadurch gekennzeichnet, dass** der wenigstens eine Abstandshalter (32) wendelförmig in entgegengesetztem Wickelsinn wie die Elektroden (18) verläuft und mit den Elektroden (18) und gegebenenfalls mit dem in gleichem Wickelsinn wie die Elektroden (18) verlaufenden Abstandshalter (30) verflochten ist.

7. Vorrichtung nach einem der vorherigen Ansprüche,
**dadurch gekennzeichnet, dass** der wenigstens eine Abstandshalter (30, 32) aus einem wasserbeständigen, vorzugsweise gesundheitlich unbedenklichen Material, insbesondere Kunststoff, ist.

8. Vorrichtung nach einem der vorherigen Ansprüche,
**dadurch gekennzeichnet, dass** jede Elektrode (18) mit einem Ausgang einer Spannungsquelle, insbesondere einer Gleichspannungsquelle (16), verbunden ist.

9. Vorrichtung nach Anspruch 8, **dadurch gekennzeichnet, dass** die Polarität der Ausgänge (22, 24) der Spannungsquelle (16) getauscht werden kann.

10. Vorrichtung nach Anspruch 8 oder 9, **dadurch gekennzeichnet, dass** die Spannungsquelle (16) abhängig von einer Wasserströmung in der Leitung (14) gesteuert werden kann.

11. Sanitäreinrichtung mit wenigstens einer Sanitärarmatur zur Regulierung eines Wasserstroms und mit einer Leitung (14), die die Sanitärarmatur kommunizierend mit einem Wasserausströmer verbindet, **gekennzeichnet durch** eine in der Leitung angeordnete sanitäre Entkeimungsvorrichtung (10) nach einem der Ansprüche 1 bis 10.

12. Sanitäreinrichtung nach Anspruch 11, **dadurch gekennzeichnet, dass** wenigstens eine elektrische Spannungsquelle zum Betreiben der sanitären Entkeimungsvorrichtung (10) vorgesehen ist.

13. Sanitäreinrichtung nach Anspruch 12, **dadurch gekennzeichnet, dass** wenigstens eine Steuereinrichtung (16) zur Ansteuerung der Spannungsquelle vorgesehen ist.

14. Sanitäreinrichtung nach Anspruch 13, **dadurch gekennzeichnet, dass** die Steuereinrichtung (16) mit wenigstens einer Sensoreinrichtung (28) zur Detektion eines Wasserstroms gekoppelt ist, um, vorzugsweise bei Vorliegen des Wasserstroms, einen Betrieb der sanitären Entkeimungsvorrichtung zumindest zeitweilig zu unterbrechen.

## Claims

1. Sanitary sterilising device for combating microorganisms in water, which device is constructed so as to be arranged in the interior of a line and comprises at least two electrodes (18) which are of helical construction in each case, wherein biocidal ions can be released, at least from one electrode (18),
**characterised in that**
the at least two electrodes (18) are arranged in the form of a double helix and are kept at a distance by at least one spacer (30, 32) made of electrically insulating material and extending at least substantially over the length of said electrodes (18); wherein
the at least one spacer (30, 32) is of thread-shaped, cord-shaped or strip-shaped construction, and
the at least two electrodes (18) form a braid (12) with the at least one spacer (30, 32) in such a way that they do not touch one another.

2. Device according to claim 1, **characterised in that** the at least two electrodes (18) can be brought to different electrical potentials for the purpose of electrolytically releasing the biocidal ions.

3. Device according to claim 1 or 2, **characterised in that** the braid (12) consisting of the electrodes (18) and the at least one spacer (30, 32) is flexible.

4. Device according to one of claims 1 to 3, **characterised in that** the electrodes (18) comprise silver, in particular are, in each case, one or more silver wires (18) or silver strips or wires or strips coated with silver.

5. Device according to one of claims 1 to 4, **characterised in that** the at least one spacer (30) extends helically between the electrodes (18) in the same direction of winding as said electrodes (18).

6. Device according to one of claims 1 to 5, **characterised in that** the at least one spacer (32) extends helically in the opposite direction of winding to the electrodes (18) and is interlaced with said electrodes (18) and, optionally, with the spacer (30) which extends in the same direction of winding as said electrodes (18).

7. Device according to one of the preceding claims, **characterised in that** the at least one spacer (30, 32) is made of a water-resistant material which is preferably safe as regards health, in particular plastic.

8. Device according to one of the preceding claims, **characterised in that** each electrode (18) is connected to an output of a voltage source, in particular a direct-current voltage source (16).

9. Device according to claim 8, **characterised in that** the polarity of the outputs (22, 24) of the voltage source (16) can be interchanged.

10. Device according to claim 8 or 9, **characterised in that** the voltage source (16) can be controlled in dependence upon a water flow in the line (14).

11. Sanitary apparatus having at least one sanitary fitting for regulating a flow of water, and having a line (14) which connects said sanitary fitting to a water-discharger in a communicating manner, **characterised by** a sanitary sterilising device (10) according to one of claims 1 to 10 arranged in said line.

12. Sanitary apparatus according to claim 11, **characterised in that** at least one electrical voltage source is provided for operating the sanitary sterilising device (10).

13. Sanitary apparatus according to claim 12, **characterised in that** at least one control apparatus (16) for activating the voltage source is provided.

14. Sanitary apparatus according to claim 13, **characterised in that** control apparatus (16) is coupled to at least one sensor apparatus (28) for detecting a flow of water in order to interrupt operation of the sanitary sterilising device at least temporarily, preferably when the flow of water is present.

## Revendications

1. Dispositif d'aseptisation sanitaire destiné à lutter contre les micro-organismes dans l'eau, qui est conçu pour être disposé à l'intérieur d'une conduite et qui comprend au moins deux électrodes (18), des ions biocides pouvant être libérés à partir d'au moins une électrode (18),
**caractérisé en ce**
**que** lesdites au moins deux électrodes (18) sont disposées en forme de double hélice et maintenues à distance par au moins un écarteur (30, 32) en matériau électriquement isolant s'étendant au moins sensiblement sur la longueur des électrodes (18) ;
ledit au moins un écarteur (30, 32) étant réalisé sous forme de fil, de cordon ou de bande, et
lesdites au moins deux électrodes (18) formant avec ledit au moins un écarteur (30, 32) une tresse (12) de façon qu'elles ne se touchent pas.

2. Dispositif selon la revendication 1, **caractérisé en ce que** lesdites au moins deux électrodes (18) peuvent être mises à différents potentiels électriques aux fins de libération électrolytique des ions biocides.

3. Dispositif selon la revendication 1 ou 2, **caractérisé en ce que** la tresse (12) composée des électrodes (18) et dudit au moins un écarteur (30, 32) est flexible.

4. Dispositif selon une des revendications 1 à 3, **caractérisé en ce que** les électrodes (18) présentent de l'argent, en particulier chaque fois un ou plusieurs fils (18) ou bandes en argent, ou sont des fils ou des bandes revêtus d'argent.

5. Dispositif selon une des revendications 1 à 4, **caractérisé en ce que** ledit au moins un écarteur (30) s'étend en forme d'hélice entre les électrodes (18), dans le même sens d'enroulement que les électrodes (18).

6. Dispositif selon une des revendications 1 à 5, **caractérisé en ce que** ledit au moins un écarteur (32) s'étend en forme d'hélice dans un sens d'enroulement opposé à celui des électrodes (18) et est entrelacé avec les électrodes (18) et le cas échéant avec l'écarteur (30) s'étendant dans le même sens d'enroulement que les électrodes (18).

7. Dispositif selon une des revendications précédentes, **caractérisé en ce que** ledit au moins un écarteur (30, 32) est réalisé dans un matériau résistant à l'eau, de préférence sans danger pour la santé, en particulier en matière plastique.

8. Dispositif selon une des revendications précédentes, **caractérisé en ce que** chaque électrode (18) est reliée à une sortie d'une source de tension, en particulier d'une source de tension continue (16).

9. Dispositif selon la revendication 8, **caractérisé en ce que** la polarité des sorties (22, 24) de la source de tension (16) peut être changée.

10. Dispositif selon la revendication 8 ou 9, **caractérisé en ce que** la source de tension (16) peut être commandée en fonction d'un écoulement d'eau dans la conduite (14).

11. Equipement sanitaire comprenant au moins une robinetterie sanitaire pour réguler le débit d'eau et une conduite (14) qui relie de manière communicante la robinetterie sanitaire à un diffuseur d'eau, **caractérisé par** un dispositif d'aseptisation sanitaire (10) selon une des revendications 1 à 10.

12. Equipement sanitaire selon la revendication 11, **caractérisé en ce qu'**il est prévu au moins une source de tension électrique pour faire fonctionner le dispositif d'aseptisation sanitaire (10).

13. Equipement sanitaire selon la revendication 12, **caractérisé en ce qu'**il est prévu au moins un dispositif de commande (16) pour commander la source de tension.

14. Equipement sanitaire selon la revendication 13, **caractérisé en ce que** le dispositif de commande (16) est couplé à au moins un dispositif capteur (28) permettant de détecter un débit d'eau pour, de préférence, quand le débit d'eau est présent, interrompre au moins temporairement un fonctionnement du dispositif d'aseptisation sanitaire.
